# FASCICULE DE BREVET EUROPEEN

(11) **EP 1 322 568 B1**
(45) Date de publication et mention de la délivrance du brevet: **21.02.2007**
(21) Numéro de dépôt: 01936536.0
(22) Date de dépôt: 16.05.2001
(51) Int. Cl.: C03C 25/26, C08J 5/08

(54) **COMPOSITION D'ENSIMAGE POUR FILS DE VERRE, PROCEDE UTILISANT CETTE COMPOSITION ET PRODUITS RESULTANTS**
SCHLICHTEZUSAMMENSETZUNG FÜR GLASFASERN, VERFAHREN ZUR ANWENDUNG DIESER ZUSAMMENSETZUNG UND SO ENTHALTENE PRODUKTE
SIZING COMPOSITION FOR GLASS YARNS, METHOD USING SAID COMPOSITION AND RESULTING PRODUCTS

(30) Priorité: 17.05.2000 FR 0006266
(43) Date de publication de la demande: 02.07.2003
(73) Titulaire: Saint-Gobain Vetrotex France S.A., 73000 Chambéry (FR)
(72) Inventeur: MOIREAU, Patrick, F-73193 Curienne (FR)
(74) Mandataire: Muller, René
(86) Numéro de dépôt international: PCT/FR2001/001488
(87) Numéro de publication internationale: WO 2001/087792

(56) Documents cités:
- FR-A- 2 772 369
- US-A- 4 988 461
- PATENT ABSTRACTS OF JAPAN vol. 018, no. 157 (C-1180), 16 mars 1994 (1994-03-16) & JP 05 330860 A (DAI ICHI KOGYO SEIYAKU CO LTD), 14 décembre 1993 (1993-12-14)
- "GLASS FIBER COATING COMPOSITION" RESEARCH DISCLOSURE,GB,INDUSTRIAL OPPORTUNITIES LTD. HAVANT, no. 367, 1 novembre 1994 (1994-11-01), page 606 XP000494363 ISSN: 0374-4353
- YAMAMURA SHIGEKAZU ET AL: "BINDER FOR GLASS FIBERS" , CHEMICAL ABSTRACTS + INDEXES,US,AMERICAN CHEMICAL SOCIETY. COLUMBUS, VOL. 110, NR. 9, PAGE(S) 319 XP000057270 ISSN: 0009-2258 abrégé & JP 63 230542 A (NIPPON GLASS FIBER CO. LTD.) 27 septembre 1988 (1988-09-27)

## Description

La présente invention se rapporte au domaine des fibres de renforcement, notamment pour la réalisation de composites. Elle concerne une composition d'ensimage pour fils de verre, un procédé de préparation desdits fils utilisant cette composition ainsi que les fils de verre obtenus et les composites réalisés à partir de ces fils.

La fabrication de fils de verre de renforcement se fait de façon connue à partir de filets de verre fondu s'écoulant des orifices de filières. Ces filets sont étirés sous la forme de filaments continus, puis ces filaments sont rassemblés en fils de base, lesquels fils sont alors collectés.

Avant leur rassemblement sous forme de fils, les filaments sont habituellement revêtus d'une composition d'ensimage par passage sur un organe ensimeur. Ce dépôt d'ensimage est très important car il permet l'obtention des fils, d'une part, et une utilisation efficace de ces fils dans la confection de composites, d'autre part. L'ensimage a les fonctions habituelles suivantes : il protège les fils de l'abrasion, évitant ainsi qu'ils se rompent pendant leur fabrication et éventuellement leur utilisation ; il permet d'associer les fils ainsi formés avec des matières organiques et/ou inorganiques à renforcer, en facilitant notamment le mouillage et l'imprégnation des fils par ces matières.

En général, l'ensimage favorise aussi l'adhésion entre le verre et la matière à renforcer ce qui permet d'obtenir des composites ayant des propriétés mécaniques améliorées.

L'ensimage peut aussi assurer l'intégrité des fils, c'est-à-dire permettre la liaison des filaments entre-eux au sein des fils. Cette intégrité est recherchée notamment dans les applications où les fils sont soumis à des contraintes mécaniques fortes telles que les applications textiles. En effet, les filaments peu solidaires les uns des autres ont tendance à se rompre ce qui perturbe le bon fonctionnement des machines textiles.

En outre, les fils qui ne sont pas intègres sont connus pour être difficiles à manipuler.

De manière générale, les compositions d'ensimage doivent aussi pouvoir résister au cisaillement induit par le passage des fils sur les dispositifs d'étirage et mouiller la surface des filaments, et ce, à des vitesses d'étirage élevées, de l'ordre de plusieurs dizaines de mètres par seconde.

Par ailleurs, il est recommandé de choisir les compositions d'ensimage parmi celles qui conservent leurs propriétés initiales dans le temps.

Ces compositions ne doivent pas être susceptibles de réagir à la température de stockage (en général inférieure à 30°C) ou même à une température plus élevée telle que l'on peut rencontrer sous la filière (de l'ordre de 80-100°C) car alors l'augmentation de la viscosité est telle qu'il est difficile, voire même impossible, de déposer l'ensimage sur les filaments.

Les ensimages les plus couramment employés sont des ensimages aqueux à faible viscosité, faciles à mettre en oeuvre mais qui doivent être déposés en grande quantité sur les filaments. L'eau représente généralement plus de 80 % en poids de l'ensimage ce qui oblige à sécher les fils avant leur utilisation car l'eau peut entraîner entre autres une diminution de l'adhérence entre les fils et la matière à renforcer. Le séchage par traitement thermique est une opération longue et coûteuse qui nécessite une adaptation parfaite aux conditions de fabrication des fils. Un tel traitement n'est pas neutre au regard du fil ensimé. Lorsque le fil ensimé est sous la forme d'enroulements notamment, il peut se produire une modification de la répartition des constituants de l'ensimage par migration irrégulière et/ou sélective, une coloration du fil et une déformation de l'enroulement. La déformation s'observe aussi, en l'absence de séchage, sur des enroulements à bords droits (ou stratifils) de fils fins (masse linéique ou titre inférieur à 600 tex (g/km)) revêtus d'un ensimage aqueux.

Afin de résoudre les problèmes précités, il a été proposé des compositions d'ensimage dites anhydres, c'est-à-dire qui comprennent moins de 5% en poids de solvant. De telles compositions sont décrites par exemple dans les demandes de brevets suivants :

Dans FR-A-2 727 972, on propose une composition pour l'ensimage de fils de verre qui polymérise sous l'action d'un rayonnement UV ou d'un faisceau d'électrons. Cette composition a une viscosité inférieure ou égale à 400 cP et comprend un système de base polymérisable qui contient au moins un composant de masse moléculaire inférieure à 750 présentant au moins une fonction époxy et comprenant au moins 60% en poids d'un ou plusieurs composant(s) de masse moléculaire inférieure à 750 présentant au moins une fonction époxy, hydroxy, vinyléther, acrylique ou méthacrylique.

Dans FR-A-2 772 369, on décrit une composition d'ensimage pour fils de verre, qui ne nécessite pas d'étape de séchage postérieurement au dépôt sur le fil. Cette composition comprend au moins 60 % en poids de composants susceptibles de polymériser, ces composants étant pour au moins 60 % d'entre-eux des composants de masse moléculaire inférieure à 750 et ces composants polymérisables comprenant au moins un mélange de composant(s) ayant au moins une fonction réactive acrylique et/ou méthacrylique et de composant(s) ayant au moins une fonction amine primaire et/ou amine secondaire, au moins 20 % en poids de ces composants présentant au moins deux fonctions réactives acrylique, méthacrylique, amine primaire et/ou amine secondaire.

Les compositions anhydres qui viennent d'être citées contiennent une forte proportion de monomères susceptibles de polymériser à la température ambiante. Etant donné qu'il s'écoule très peu de temps, en général moins d'une seconde entre le dépôt de la composition sur les filaments de verre et le bobinage du fil, les spires de l'enroulement sont généralement revêtues d'un ensimage incomplètement polymérisé. Dans les conditions de bobinage direct du fil pour former un enroulement à bords droits (stratifils), la cinétique de polymérisation est insuffisante pour permettre un blocage efficace des premières couches de fil. Sous l'effet de l'accumulation des couches suivantes, les couches inférieures ont tendance à s'affaisser, entraînant ainsi une modification des caractéristiques dimensionnelles de l'enroulement en cours de bobinage. Les défauts observés (déformation, accroissement de la longueur, ... ) rendent de tels enroulements inutilisables sur les dispositifs adéquats.

Dans les conditions qui viennent d'être exposées, la composition d'ensimage doit pouvoir être déposée sur les filaments à l'état liquide et évoluer rapidement vers un état gélifié pendant le bobinage du fil. Le temps nécessaire pour atteindre l'état gélifié (« temps de gel ») dépend de la température au moment du dépôt, température qui peut être supérieure à 100°C. De manière générale, une composition d'ensimage est satisfaisante lorsque son temps de gel mesuré à la température ambiante (de l'ordre de 25°C) est comprise entre 10 et 40 minutes, de préférence 15 et 30 minutes.

Par ailleurs, à la température du dépôt, pouvant être supérieure à 100°C comme indiqué ci-avant, les monomères présents dans la composition d'ensimage ont tendance à s'évaporer du fait de leur tension de vapeur relativement élevée. Il s'ensuit une diminution de la teneur en monomères dans la composition et donc une variation de la quantité et de la composition de l'ensimage le long du fil. En outre, les composés volatils et certains monomères, notamment les monomères aminés, sont susceptibles de présenter un risque pour la santé des personnes qui les manipulent.

La présente invention a pour objet une nouvelle composition d'ensimage apte à revêtir des fils de verre de manière sûre, rapide et uniforme sur toute leur longueur et conduisant à des enroulements corrects sur des supports appropriés, cette composition rendant les fils aisément manipulables et leur conférant une souplesse compatible avec les traitements ultérieurs tout en préservant leur intégrité.

Un autre objet de l'invention concerne les fils de verre ensimés au moyen de la composition définie au paragraphe précédent, lesdits fils présentant des propriétés mécaniques constantes sur toute leur longueur et étant aptes à renforcer une matière organique et/ou inorganique pour préparer des composites, en particulier des corps creux par enroulement, des tissus pour véhicules et des grilles de renfort de façade.

La composition d'ensimage selon l'invention est constituée d'une solution dont la teneur en solvant est inférieure à 5% en poids, cette solution comprenant au moins 45 % en poids de composants susceptibles de polymériser, ces composants polymérisables étant pour au moins 40 % d'entre eux des composants de masse moléculaire comprise entre 750 et 5000 et ces composants polymérisables comprenant au moins un mélange susceptible de polymériser
- de composant(s) présentant au moins une fonction réactive acrylique et/ou méthacrylique
- et de composant(s) présentant au moins une fonction réactive amine primaire et/ou secondaire.

En général, et de manière préférée, au moins 40 % des composants polymérisables présentent au moins deux fonctions réactives choisies parmi les fonctions acrylique, méthacrylique, amine primaire et amine secondaire.

Dans la présente invention, les expressions ci-après ont la signification suivante :
Par « solvant », on entend l'eau et les solvants organiques susceptibles d'être mis en oeuvre pour solubiliser certains composants polymérisables. La présence de solvant(s) en quantité limitée ne nécessite pas de traitement particulier pour les éliminer. Dans la majeure partie des cas, les ensimages selon l'invention sont totalement dénués de solvant.
Par « polymériser », « polymérisable », « polymérisation », .... on entend respectivement « polymériser et/ou réticuler », « polymérisable et/ou réticulable », « polymérisation et/ou réticulation », ....
Par « fonction réactive », on entend une fonction susceptible d'intervenir dans la réaction de polymérisation de l'ensimage, la polymérisation pouvant être effectuée à la température ambiante ou à une température plus élevée (polymérisation thermique).
Par « composants polymérisables », on entend les composants indispensables qui permettent d'obtenir la structure polymérisée attendue de l'ensimage.

Dans la suite du texte, par « composant (méth)acrylique » et « composant amine primaire et/ou secondaire » on désigne, respectivement, un « composant présentant au moins une fonction réactive acrylique et/ou au moins une fonction réactive méthacrylique » et un « composant présentant au moins une fonction réactive amine primaire et/ou au moins une fonction réactive amine secondaire ».

Dans la composition d'ensimage selon l'invention, les composants polymérisables représentent entre 40 et 100 % en poids de la composition, principalement 45 et 80 % en poids et, dans la plupart des cas, entre 50 et 70 %. L'ensemble de ces composants polymérisables est appelé par la suite « système de base ».

De préférence, le système de base est constitué majoritairement (c'est-à-dire à plus de 50 %, de préférence au moins 75 % et jusqu'à 100 % en poids dans la majorité des cas de composant(s) (méth)acrylique et de composant(s) amine primaire et/ou secondaire, l'utilisation de ce mélange de composants permettant l'obtention après polymérisation de copolymères participant notablement à la structure de l'ensimage polymérisé.

En outre, le système de base comprend au moins 40 % (de préférence au moins 45 % et jusqu'à 85 % en poids) de composant(s) de masse moléculaire comprise entre 750 et 5000. Notamment, au moins 40 %, de préférence au moins 50 % et jusqu'à 95 % en poids de composant(s) (méth)acryliques et de composant(s) amine primaire et/ou secondaire présentent une masse comprise entre 750 et 5000.

On précise que dans la définition de l'invention, les différents taux sont évalués de manière indépendante les uns des autres, un même composant pouvant intervenir dans plusieurs taux.

De préférence et en général selon l'invention, les composants de masse moléculaire comprise entre 750 et 5000 précités ont une masse moléculaire inférieure à 3000. De même, dans la plupart des cas selon l'invention, et de façon préférée, ces composants sont des polymères monofonctionnels ou polyfonctionnels, comme explicité par la suite.

Selon certains modes de réalisation, le système de base selon l'invention peut éventuellement comprendre jusqu'à 60 % de composant(s) présentant une masse moléculaire inférieure ou égale à 750, et de préférence 15 à 50 % en poids de ladite composition.

Les composants polymérisables de la composition selon l'invention peuvent présenter une ou plusieurs fonctions réactives. Par la suite, on définit par « polyfonctionnel » tout composant présentant au moins deux fonctions réactives. Ainsi, par « composant polyfonctionnel (méth)acrylique et/ou amine primaire et/ou secondaire », on entend un « composant ayant au moins deux fonctions réactives choisies parmi les fonctions acrylique, méthacrylique, amine primaire et/ou secondaire ».

Selon l'invention, le système de base comprend au moins 40 % de composants polyfonctionnels (méth)acrylique et/ou amine primaire et/ou secondaire. De préférence, il comprend entre 40 et 100% en poids de ces composant(s), et mieux encore 50 à 80 % ; ces composants étant préférentiellement choisis parmi : les composants présentant au moins deux fonctions réactives acryliques, les composants présentant au moins deux fonctions réactives méthacryliques, les composants ayant au moins deux fonctions réactives amine primaire ou secondaire, les composants ayant au moins une fonction réactive acrylique et au moins une fonction réactive méthacrylique et les composants ayant au moins une fonction réactive amine primaire et au moins une fonction réactive amine secondaire.

Le système de base comprend au moins un composant polyfonctionnel (méth)acrylique de masse moléculaire compris entre 750 et 5000 et au moins un composant polyfonctionnel amine primaire et/ou amine secondaire.

Le taux de composant(s) polyfonctionnel(s) (méth)acrylique est d'au moins 20 % du système de base, et de préférence compris entre 30 et 70%.

A titre d'exemples non limitatifs, le composant (méth)acrylique de la composition peut être choisi parmi les alkyl(méth)acrylate à longue chaîne aliphatique ou cycloaliphatique, les (méth)acrylates aromatiques, les produits d'estérification d'acide (méth)acrylique et d'amino-alcool à longue chaîne, les produits de réaction d'acide (méth)acrylique et de polyalkylèneglycol, les produits de réaction d'acide (méth)acrylique et d'alcool du type polyéther, notamment de polyéther polyol, les produits de réaction d'acide (méth)acrylique et d'alcool du type polyester, notamment de polyester polyol, les produits de réaction d'acide (méth)acrylique et du produit de réaction d'au moins un isocyanate aromatique et d'au moins un polyol, et les mélanges de ces (méth)acrylates.

En règle générale selon l'invention, la proportion de composant(s) (méth)acrylate dans la composition d'ensimage est comprise entre 15 et 60 % en poids. De préférence, le(s) composant(s) polyfonctionnel(s) (méth)acrylique représentent au moins 50 % de ces composant(s) (méth)acrytique. Comme composant(s) polyfonctionnel(s) (méth)acrylique, on utilise de préférence au moins un composant présentant au moins trois fonctions réactives choisies parmi les fonctions acrylique et méthacrylique.

De manière particulièrement avantageuse, on utilise au moins un composant présentant quatre fonctions réactives choisies parmi les fonctions acryliques et méthacryliques (composants tétrafonctionnels) et/ou un composant présentant au moins six fonctions réactives choisies parmi les fonctions acrylique et méthacrylique (composants hexafonctionnels).

A titre d'exemples non limitatifs, le composant amine primaire et/ou secondaire peut être l'isophoronediamine, la menthanediamine, la N-aminoéthylpipérazine, la para- ou méta-phénylènedianiline, l'oxydianiline, la diéthyltoluènediamine, le 4,4'-diaminodiphénylméthane, une amine secondaire à chaîne aliphatique, la diisopentylamine, la N-éthyl-méthylamine, la 1-(2-hydroxy-éthyl)-2-imidazolidinone, la 2,6-diméthylmorpholine, le 2-propyl-imidazole, la 2,6-diaminopyridine, les polyamidoamines, les dérivés de polyéthylènepolyamines, les polyoxyalkylènepolyamines, notamment les polyoxyéthylènepolyamines, les polyoxypropylènepolyamines, les poly(oxyéthylène/oxypropylène)polyamines, les poly(oxypropylène/oxybutylène)polyamines telles que la 4,9-dioxa-1,2-dodécanediamine, la N'-(3-aminopropyl)-N,N'-diméthyl-1 ,3-propane-diamine, le 2-butyl-2-éthyl-1,5-pentanediamine, l'hexaméthylènediamine, la méta-xylylènediamine, les aminoalcools, les amidoamines et les mélanges d'amine(s) primaire(s) et d'alcool(s) phénolique(s) (bases de Mannich).

En règle générale selon l'invention, la proportion de composant(s) amine primaire et/ou secondaire dans la composition d'ensimage est comprise entre 4 et 40 %, de préférence entre 6 et 25 % en poids.

Dans la plupart des cas, elle est comprise entre 6 et 20 % de la composition d'ensimage. De préférence, le système de base comprend au moins un composant polyfonctionnel amine primaire et/ou secondaire, et mieux encore au moins un composant difonctionnel c'est-à-dire présentant deux fonctions réactives choisies parmi les fonctions amine primaire et/ou secondaire. De préférence également, les fonctions amine des composants amine primaire et/ou secondaire sont directement rattachées à un radical alkylène, cycloalkylène ou arylalkylène.

Dans de nombreux cas, le(s) composant(s) (méth)acrylique et le(s) composant(s) amine primaire et/ou secondaire sont choisis de telle sorte que le rapport r correspondant au nombre de sites réactifs (méth)acrytique, divisé par le nombre de sites réactifs amine primaire et/ou secondaire en présence soit compris entre 0,15 et 3 pour permettre une polymérisation suffisante de la composition d'ensimage. Dans la plupart des cas, ce rapport r est compris entre 0,3 et 2,5, et de préférence entre 0,4 et 2.

La composition d'ensimage selon l'invention peut comprendre, en plus des composants du système de base, au moins un catalyseur spécifique qui accélère la vitesse de la réaction de polymérisation, plus particulièrement lorsque les composants polymérisables sont peu réactifs.

On peut utiliser un catalyseur choisi parmi les amines tertiaires, les dérivés d'amines tertiaires et les halogénures métalliques tels que AlCl₃, FeCl₃, InCl₃, BF₃ et CuCl₂ ou les complexes organométalliques tels que Cu éthylène-diamine, Yb acétate, Yb triflate. La teneur en catalyseur dans la composition d'ensimage peut atteindre 8 % en poids. Dans la plupart des cas, on n'utilise pas de catalyseur.

En plus des composants précités qui participent essentiellement à la structure de l'ensimage polymérisé, et le cas échéant des catalyseurs, la composition d'ensimage peut comprendre un ou plusieurs composants (ci-après désignés par additifs). Ces additifs confèrent à l'ensimage des propriétés particulières et, lorsque la composition est déposée en deux temps, ils peuvent être apportés par l'une et/ou l'autre des compositions constituant l'ensimage.

La composition selon l'invention peut comprendre, à titre d'additif, au moins un agent de couplage permettant d'accrocher l'ensimage sur le verre. L'agent de couplage peut être un composant du système de base, auquel cas il participe à la réaction de polymérisation ou un composant intervenant seulement en tant qu'additif n'intervenant pas dans la polymérisation.

La proportion d'agent(s) de couplage est généralement comprise entre 0 et 30 % en poids de la composition d'ensimage et dans la plupart des cas supérieure à 5% en poids. De préférence, elle est comprise entre 10 et 25 % de la composition.

L'agent de couplage est généralement choisi parmi les silanes tels que le gamma-glycidoxypropyltriméthoxysilane, le gamma-acryloxypropyltriméthoxysilane, le gamma-méthacryloxypropyltriméthoxysilane, le poly(oxyéthylène/oxypropylène) triméthoxysilane, le gamma-aminopropyltriéthoxysilane, le vinyltriméthoxysilane, le phényl-aminopropyltriméthoxysilane, le styrylaminoéthylaminopropyltriméthoxy-silane ou le terbutylcarbamoylpropyltriméthoxysilane, les siloxanes, les titanates, les zirconates et les mélanges de ces composés. On choisit de préférence les silanes.

La composition peut comprendre, à titre d'additif, au moins un agent de mise en oeuvre textile jouant essentiellement un rôle de lubrifiant, et il est dans de nombreux cas nécessaire pour que la composition présente les fonctions d'un ensimage.

La proportion d'agent de mise en oeuvre textile est généralement comprise entre 0 et 30 % en poids de la composition, et de préférence 10 à 25 %.

L'agent de mise en oeuvre textile est généralement choisi parmi les esters gras tels que le laurate de décyle, le palmitate d'isopropyle, le palmitate de cétyle, le stéarate d'isopropyle, le stéarate d'isobutyle, l'adipate d'éthylèneglycol ou le trioctanoate de triméthylolpropane, les dérivés d'alkylphénols tels que le nonylphénol éthoxylé, les dérivés de glycols tels que les polyéthylèneglycols ou les polypropylèneglycols de masse moléculaire inférieure à 2000, les mélanges à base d'huiles minérales, et les mélanges de ces composés.

La composition selon l'invention peut aussi comprendre, à titre d'additif, au moins un agent filmogène qui joue uniquement le rôle d'agent de glissement facilitant le fibrage, notamment en empêchant un frottement important des filaments sur le dispositif ensimeur lorsque ces derniers sont étirés à grande vitesse et/ou lorsqu'ils sont très fins. Cet agent est cependant coûteux et peut en outre entraîner une diminution des caractéristiques mécaniques des fils.

La proportion d'agent filmogène est généralement inférieure ou égale à 8 % en poids de la composition, et de préférence inférieure ou égale à 5 %.

L'agent filmogène est généralement choisi parmi les silicones et les dérivés de silicones tels que les huiles de silicones, les siloxanes et les polysiloxanes tels que le glycidyl(n)polydiméthylsiloxane ou l'alpha,oméga-acryloxypolydiméthylsiloxane, les silicones polyacrylates, et les mélanges de ces composés.

La composition selon l'invention peut comprendre, à titre d'additif, au moins un agent d'adaptation aux matières à renforcer, par exemple un inhibiteur de la corrosion tel que l'acide gallique dans le cas des matières cimentaires.

La composition selon l'invention peut être déposée sur les filaments de verre en une ou plusieurs étapes, par exemple dans les conditions du procédé décrit dans FR-A-2 763 328. Dans ce procédé, on étire des filets de verre fondu s'écoulant d'orifices disposés à la base d'une ou plusieurs filières sous la forme d'une ou plusieurs nappes de filaments continus puis on rassemble les filaments en un ou plusieurs fils que l'on collecte sur un ou plusieurs supports en mouvement. On effectue le dépôt de l'ensimage en appliquant sur les filaments une première composition stable de viscosité comprise entre 20 et 500 cP, et au moins une deuxième composition stable de viscosité comprise entre 20 et 500 cP, amenée séparément de la première composition.

La deuxième composition peut être déposée sur les filaments au plus tôt lors du dépôt de la première composition ou sur les fils au plus tard lors de leur collecte sur les supports. L'écart de viscosité entre les compositions est généralement inférieur à 250 cP.

La composition selon l'invention est préférentiellement appliquée en deux étapes, la première composition comprenant le(s) composant(s) (méth)acrylique, et éventuellement un ou plusieurs additifs, et la deuxième composition comprenant le(s) composant(s) amine primaire et/ou secondaire, et éventuellement un ou plusieurs additifs, notamment le ou les catalyseurs de polymérisation.

Le dépôt de l'ensimage en deux étapes est particulièrement avantageux. Il permet une meilleure maîtrise des réactions de polymérisation et de ce fait l'ensimage a une qualité uniforme sur toute la longueur des fils tout en assurant une productivité élevée avec un risque réduit de casse des fils. Dans la plupart des cas, le dépôt ne nécessite pas d'apport extérieur de chaleur.

Les fils ensimés sont généralement collectés sous la forme d'enroulements sur des supports en rotation. Quels que soient l'état de polymérisation de l'ensimage et l'angle de croisure, même lorsque ce dernier est faible, (inférieur à 1,5°), il est facile de dévider les fils provenant des enroulements et de les manipuler. Les enroulements à bords droits conservent leurs caractéristiques dimensionnelles et ne sont pas déformés.

Les fils peuvent aussi être collectés sur des supports récepteurs en translation. Ils peuvent être notamment projetés par un organe servant aussi à les étirer vers la surface de collecte se déplaçant transversalement à la direction des fils projetés en vue d'obtenir une nappe de fils continus entremêlés ou « mat ». Les fils peuvent aussi être coupés avant la collecte par un organe servant également à les étirer.

Les fils obtenus selon l'invention peuvent ainsi se trouver sous différentes formes après la collecte, par exemple sous la forme de bobines de fils continus (gâteaux, stratifils, « cops »...), de fils coupés, de tresses, de rubans et de « mats » ou de réseaux. Les filaments de verre constituant ces fils ont un diamètre qui peut varier dans une large mesure, le plus souvent de 5 à 30 µm. Ils peuvent être constitués de n'importe quel verre, le plus connu dans le domaine des fils de renforcement étant le verre E et le verre AR.

Les fils obtenus selon l'invention peuvent être utilisés avantageusement pour renforcer diverses matières en vue d'obtenir des pièces composites ayant des propriétés mécaniques élevées. Les composites sont obtenus en associant au moins des fils de verre selon l'invention et au moins une matière organique et/ou inorganique, le taux de verre variant généralement de 2 à 5 % en poids (matrice cimentaire) et de 30 à 75% en poids, et de préférence 40 à 70 % (matrice organique). Les composites préférés comprennent des fils de verre, en majorité (plus de 50 % en poids) constitués des fils selon l'invention, et une matière organique, telle qu'une résine polyester, époxyde, phénolique ou du type styrène-butadiène (« SBR »). Avantageusement, la résine est une résine polyester ou époxyde.

Les exemples qui suivent permettent d'illustrer l'invention sans toutefois la limiter.

Dans ces exemples, on utilise les méthodes d'analyse suivantes pour la mesure des propriétés physiques et mécaniques des fils de verre revêtus de la composition d'ensimage selon l'invention et des composites renfermant lesdits fils :

### Fils de verre

- La résistance à l'abrasion est mesurée en pesant la quantité de bourre formée après passage du fil sur une série de 8 embarrages cylindriques à 90° en céramique. Elle est exprimée en mg pour 1 kg de fil testé.
- La raideur ou rigidité est mesurée dans les conditions définies par la norme ISO 3375 sur 10 éprouvettes avant et après soumission au test de résistance à l'abrasion mentionné ci-avant. La raideur est exprimée en mm et elle est notée x (y), x et y représentant la valeur mesurée avant et après passage sur les embarrages, respectivement.

La valeur y permet de préjuger de l'aptitude du fil à être imprégné par une matière, plus particulièrement une matière organique du type polymère. En général, un fil de verre ensimé dont la valeur de y est inférieure à 100 mm et de préférence proche de 60 mm (valeur la plus basse pouvant être obtenue) est satisfaisant pour des applications nécessitant une bonne imprégnation par la matrice. Un fil présentant une valeur de x supérieure ou égale à 120 et une valeur de y supérieure ou égale à 100 convient pour un usage requérant une intégrité élevée du fil.
- La perte au feu est mesurée selon la norme ISO 1887. Elle est exprimée en %.
- La ténacité est évaluée par mesure de la force de rupture en traction dans les conditions de la norme ISO 3341. Elle est exprimée en cN/tex.

### Composites

- La contrainte de rupture en flexion et le module de flexion sont mesurés dans les conditions définies par la norme ISO 178, avant et après vieillissement par immersion dans l'eau à 100°C pendant 24 heures. Ils sont exprimés en mPa, l'écart-type σ étant calculé sur 8 à 10 éprouvettes.
- La contrainte de rupture en cisaillement est mesurée dans les conditions définies par la norme ISO 4585, avant et après vieillissement par immersion dans l'eau à 100°C pendant 24 heures (exemples 1, 4, 6, 9, 12, 14) ou 72 heures (exemples 2-3, 5, 7-8, 10-11, 13, 15). Elle est exprimée en Mpa, l'écart-type σ étant calculé sur 8 à 10 éprouvettes.

### EXEMPLE 1

Des filaments de 13,6 *µ*m de diamètre obtenus par étirage de filets de verre E fondu s'écoulant d'une filière (800 orifices) sont revêtus d'une première composition A puis d'une deuxième composition B suivantes (en pourcentage pondéral) :

### Composition A

- polyester tétraacrylate de masse moléculaire = 1000 ⁽¹⁾ 18
- polyuréthane aromatique hexaacrylate de masse moléculaire = 1000 ⁽²⁾ 18
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- mélange de C, C, C-triméthylhexane diamine-1,6, de xylylènediamine et de para-tertiobutylphénol ⁽⁶⁾ 10
- trioctanoate triméthylolpropane ⁽⁷⁾ 15
- alcool laurique éthoxylé (4 OE) ⁽⁸⁾ 13

Les compositions A et B présentent une viscosité mesurée sur un appareil SOFRASER MIVI 4000 commercialisé par SOFRASER de 135,4 x 10⁻³ Pa.s (135,4 cP) et 52 x 10⁻³ Pa.s (52 cP) à 25°C, respectivement. Le rapport r est égal à 1,66.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures, sont rassemblés dans le tableau 1.

A partir des fils obtenus, on réalise des plaques composites à fils parallèles conformément à la norme ISO 9291. La résine utilisée est une résine constituée de 100 parties en poids de polyester isophtalique (référence : Synolit 1717 commercialisée par DSM) et 1,5 partie en poids de peroxyde (référence : HTM 60 commercialisée par CIBA-GEIGY).

Les valeurs des propriétés mécaniques de ces composites, en flexion et en cisaillement avant et après vieillissement figurent dans le tableau 2, pour un taux de verre ramené à 100 %.

### EXEMPLE 2

A partir des fils obtenus à l'exemple 1, on réalise des plaques composites dans les conditions de l'exemple 1 modifié en ce que la résine est remplacée par une résine époxy constituée de 100 parties en poids de résine époxy (référence LY 556 commercialisée par CIBA-GEIGY), 90 parties en poids d'anhydride phtalique (référence : Araldite HY 917 commercialisée par CIBA-GEIGY) et 0,5 partie en poids d'amine tertiaire (référence : Araldite DY 070 commercialisée par CIBA-GEIGY).

Les mesures des propriétés mécaniques des plaques obtenues sont rassemblées dans le tableau 2.

### EXEMPLE 3

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 16
- polyuréthane aromatique hexaacrylate de masse moléculaire = 1000⁽²⁾ 14
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- 4-octylphényl éthyl éther ⁽⁵⁾ 5
- mélange de C, C, C-trimethythexane diamine-1,6 , de xylylènediamine et de para-tertiobutylphénol ⁽⁶⁾ 14
- trioctanoate de triméthylolpropane ⁽⁷⁾ 10
- alcool laurique éthoxylé (4 OE) ⁽⁸⁾ 5
- dérivé aromatique alkoxylé ⁽⁹⁾ 10

Les compositions A et B présentent une viscosité de 78,4 x 10⁻³ Pa.s (78,4 cP) et 216 x 10⁻³ Pa.s (216 cP) à 25°C, respectivement, le rapport r étant égal à 1,02.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures, sont rassemblés dans le tableau 1.

A partir des fils obtenus, on réalise des plaques composites à fils parallèles dans les conditions de l'exemple 2.

Les mesures des propriétés mécaniques des plaques obtenues sont rassemblées dans le tableau 2.

### EXEMPLE 4

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 20
- polyuréthane aromatique hexaacrylate de masse moléculaire = 1000 ⁽²⁾ 10
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- mélange de C, C, C-triméthylhexane diamine-1,6 , de xylylènediamine et de para-tertiobutylphénol ⁽⁶⁾ 10
- trioctanoate de triméthylolpropane ⁽⁷⁾ 12
- alcool laurique éthoxylé (4 OE) ⁽⁸⁾ 10
- dérivé aromatique alkoxylé ⁽⁹⁾ 8
- alkylimidazoline en C₁₆ ⁽¹⁰⁾ 4

Les compositions A et B présentent une viscosité de 77,6 x 10⁻³ Pa.s (77,6 cP) et 161 x 10⁻³ Pa.s (161 cP) à 25°C, respectivement, le rapport r étant égal à 1,36.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont présentés dans le tableau 1.

A partir des fils ainsi obtenus, on réalise des plaques composites dans les conditions décrites dans l'exemple 1.

Les mesures des propriétés mécaniques des plaques obtenues sont rassemblées dans le tableau 2.

### EXEMPLE 5

A partir des fils obtenus à l'exemple 4, on réalise des plaques composites dans les conditions décrites dans l'exemple 2.

Les mesures des propriétés mécaniques des plaques obtenues sont rassemblées dans le tableau 2.

### EXEMPLE 6

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 22
- polyuréthane aromatique hexaacrylate de masse moléculaire = 1000 ⁽²⁾ 8
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- mélange de C, C, C-triméthylhexane diamine-1 ,6 , de xylylènediamine et de para-tertiobutylphénol ⁽⁶⁾ 10
- trioctanoate de triméthylolpropane ⁽⁷⁾ 12
- alcool laurique éthoxylé (4 OE) ⁽⁸⁾ 10
- dérivé aromatique alkoxylé ⁽⁹⁾ 12

Les compositions A et B présentent une viscosité de 72,8 x 10⁻³ Pa.s (72,8 cP) et 169,3 x 10⁻³ Pa.s (169,3 cP) à 25°C, respectivement, le rapport r étant égal à 1,33.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblées dans le tableau 1

A partir des fils ainsi obtenus, on réalise des plaques composites dans les conditions décrites dans l'exemple 1.

Les mesures des propriétés mécaniques des plaques obtenues sont rassemblées dans le tableau 2.

### EXEMPLE 7

A partir des fils obtenus à l'exemple 6, on réalise des plaques composites dans les conditions décrites dans l'exemple 2.

Les mesures des propriétés mécaniques des plaques obtenues sont rassemblées dans le tableau 2.

### EXEMPLE 8

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 18
- polyuréthane aromatique hexaacrylate de masse moléculaire = 1000 ⁽²⁾ 18
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- C, C, C-triméthylhexane diamine-1 ,6 4
- 4,9-dioxa-1,12-dodécanediamine 6
- trioctanoate de triméthylolpropane ⁽⁷⁾ 15
- alcool laurique éthoxylé (4 OE) ⁽⁸⁾ 13

Les compositions A et B présentent une viscosité de 127 x 10⁻³ Pa.s (127 cP) et 27 x 10⁻³ Pa.s (27 cP) à 25°C, respectivement, le rapport r étant égal à 1,10.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont présentés dans le tableau 1.

A partir des fils ainsi obtenus, on réalise des plaques composites dans les conditions décrites dans l'exemple 2.

Les mesures des propriétés mécaniques des plaques obtenues sont rassemblées dans le tableau 3.

### EXEMPLE 9

Des filaments obtenus dans les conditions de l'exemple 1, sont revêtus d'une première composition A puis d'une deuxième composition B suivantes (en pourcentage pondéral) :

### Composition A

- polyester tétraacrylate de masse moléculaire = 1000 ⁽¹⁾ 18
- polyuréthane aromatique hexaacrylate de masse moléculaire = 1000 ⁽²⁾ 18
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- C, C, C-triméthylhexane diamine-1,6 10
- trioctanoate de triméthylolpropane ⁽⁷⁾ 15
- alcool laurique éthoxylé (4 OE) ⁽⁸⁾ 13

Les compositions A et B présentent une viscosité de 127 x 10⁻³ Pa.s (127 cP) et 23,8 x 10⁻³ Pa.s (23,8 cP) à 25°C, respectivement, le rapport r étant égal à 0,88.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites dans l'exemple 1.

Les mesures des propriétés mécaniques des plaques obtenues sont rassemblées dans le tableau 3.

### EXEMPLE 10

A partir des fils ainsi obtenus à l'exemple 9, on réalise des plaques composites dans les conditions décrites dans l'exemple 2.

Les mesures des propriétés mécaniques des plaques obtenues sont rassemblées dans le tableau 3.

### EXEMPLE 11

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 18
- polyuréthane aromatique hexaacrylate de masse moléculaire = 1000 ⁽²⁾ 18
- gamma-méthacryloxypropyl triméthoxysilane ⁽³⁾ 11
- gamma-glycidoxypropyl triméthoxysilane ⁽⁴⁾ 10
   4-octylphényl éthyl éther ⁽⁵⁾ 5

### Composition B

- 4,9-dioxa-1,12 dodécanediamine 10
- trioctanoate de triméthylolpropane ⁽⁷⁾ 15
- alcool laurique éthoxylé (4 OE) ⁽⁸⁾ 13

Les compositions A et B présentent une viscosité de 127 x 10⁻³ Pa.s (127 cP) et 25,3 x 10⁻³ Pa.s (25,3 cP) à 25°C, respectivement, le rapport r étant égal à 0,76.

Les filaments sont rassemblés en fils qui sont bobinés en stratifils .

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites de l'exemple 2.

Les mesures des propriétés mécaniques des plaques obtenues sont rassemblées dans le tableau 3.

### EXEMPLE 12

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 18
- polyuréthane aromatique hexaacrylate de masse moléculaire = 1000 ⁽²⁾ 18
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- C, C, C-triméthylhexane diamine-1,6 3
- 4,9-dioxa-1,12 dodécanediamine 4
- trioctanoate de triméthylolpropane ⁽⁷⁾ 17
- alcool laurique éthoxylé (4 OE) ⁽⁸⁾ 14

Les compositions A et B présentent une viscosité de 127 x 10⁻³ Pa.s (127 cP) et 30 x 10⁻³ Pa.s (30 cP) à 25°C, respectivement, le rapport r étant égal à 1,15.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites de l'exemple 1.

Les mesures des propriétés mécaniques des plaques obtenues sont rassemblées dans le tableau 3.

### EXEMPLE 13

A partir des fils obtenus à l'exemple 12, on réalise des plaques composites dans les conditions de l'exemple 2.

Les mesures des propriétés mécaniques des plaques sont rassemblées dans le tableau 3.

### EXEMPLE 14

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 14
- polyuréthane aromatique hexaacrylate de masse moléculaire = 1000 ⁽²⁾ 14
- bisphénol F diglycidyléther ⁽¹¹⁾ 8
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- mélange de C, C, C-triméthylhexane diamine-1,6 , de xylylènediamine et de para-tertiobutylphénol ⁽⁶⁾ 10
- palmitate d'isopropyle 15
- alcool laurique éthoxylé (4 OE) ⁽⁸⁾ 13

Les compositions A et B présentent une viscosité de 110 x 10⁻³ Pa.s (110 cP) et 48,8 x 10⁻³ Pa.s (48,8 cP) à 25°C, respectivement, le rapport r étant égal à 1,36.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites dans l'exemple 1.

Les mesures des propriétés mécaniques des plaques obtenues sont rassemblées dans le tableau 3.

### EXEMPLE 15

A partir des fils obtenus à l'exemple 14, on réalise des plaques composites dans les conditions décrites dans l'exemple 2.

Les mesures des propriétés mécaniques des plaques obtenues sont rassemblées dans le tableau 3.

### EXEMPLE 16

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 20
- polyuréthane aromatique hexaacrylate de masse moléculaire = 1000 ⁽²⁾ 10
- gamma-méthacryloxypropyl triméthoxysilane ⁽³⁾ 11
- gamma-glycidoxypropyl triméthoxysilane ⁽⁴⁾ 10
- 4-octylphényl éthyl éther ⁽⁵⁾ 5

### Composition B

- mélange de C, C, C-triméthylhexane diamine-1,6), de xylylènediamine et de para-tertiobutylphénol ⁽⁶⁾ 10
- palmitate d'isopropyle 12
- alcool laurique éthoxylé (4 OE) ⁽⁸⁾ 10
- dérivé aromatique alkoxylé ⁽⁹⁾ 8
- alkylimidazoline en C₁₆ ⁽¹⁰⁾ 4

Les compositions A et B présentent une viscosité de 73,4 x 10⁻³ Pa.s (73,4 cP) et 75,2 x 10⁻³ Pa.s (75,2 cP) à 22°C, respectivement, le rapport r étant égal à 1,36.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites dans l'exemple 1.

Les mesures des propriétés mécaniques des plaques obtenues sont rassemblées dans le tableau 4.

### EXEMPLE 17

A partir des fils obtenus à l'exemple 16, on réalise des plaques composites dans les conditions décrites dans l'exemple 2.

Les mesures des propriétés mécaniques des plaques obtenues sont rassemblées dans le tableau 4.

### EXEMPLE 18

Des filaments obtenus dans les conditions de l'exemple 1 sont revêtus d'une première composition A puis d'une deuxième composition B suivantes (en pourcentage pondéral) :

### Composition A

- polyester tétraacrylate de masse moléculaire = 1000 ⁽¹⁾ 18
- polyuréthane aromatique hexaacrylate de masse moléculaire = 1000 ⁽²⁾ 11
- bisphénol F diglycidyléther ⁽¹¹⁾ 8
- gamma-méthacryloxypropyl triméthoxysilane ⁽³⁾ 10
- gamma-glycidoxypropyl triméthoxysilane ⁽⁴⁾ 10
- isostéarate de polyéthylèneglycol 300⁽¹²⁾ 5

### Composition B

- mélange de C, C, C-triméthylhexane diamine-1,6 , de xylylènediamine et de para-tertiobutylphénol ⁽⁶⁾ 10
- palmitate d'isopropyle 10
- alcool laurique éthoxylé (4 OE) ⁽⁸⁾ 10
- dérivé aromatique alkoxylé ⁽⁹⁾ 8

Les compositions A et B présentent une viscosité de 93,4 x 10⁻³ Pa.s (93,4 cP) et 73,2 x 10⁻³ Pa.s (73,2 cP) à 22°C, respectivement, le rapport r étant égal à 1,35.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites dans l'exemple 1.

Les mesures des propriétés mécaniques des plaques obtenues sont rassemblées dans !e tableau 4.

### EXEMPLE 19

A partir des fils obtenus dans l'exemple 18, on réalise des plaques composites dans les conditions de l'exemple 2.

Les mesures des propriétés mécaniques des plaques obtenues sont rassemblées dans le tableau 4

### EXEMPLE 20

Des filaments obtenus dans les conditions de l'exemple 1 sont revêtus d'une première composition A et d'une deuxième composition B suivantes (en pourcentage pondéral) :

### Composition A

- polyuréthane aliphatique hexaacrylate de masse moléculaire = 800 ⁽¹⁴⁾ 10
- polyéther tétraacrylate de masse moléculaire supérieure à 1000 ⁽¹⁵⁾ 22
- bisphénol F diglycidyléther ⁽¹¹⁾ 8
- gamma-méthacryloxypropyl triméthoxysilane ⁽³⁾ 10
- gamma-glycidoxypropyl triméthoxysilane ⁽⁴⁾ 8
- isostéarate de polyéthylèneglycol 300 ⁽¹²⁾ 4

### Composition B

- mélange de C, C, C-triméthylhexane diamine-1,6 , de xylylènediamine et de para-tertiobutylphénol ⁽⁶⁾ 9
- palmitate d'isopropyle 12
- alcool laurique éthoxylé (4 OE) ⁽⁸⁾ 10
- dérivé aromatique alkoxylé ⁽⁹⁾ 7

Les compositions A et B présentent une viscosité de 162 x 10⁻³ Pa.s (162 cP) et 66 x 10⁻³ Pa.s (66 cP) à 22°C, respectivement, le rapport r étant égal à 1,67.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites dans l'exemple 1.

Les mesures des propriétés mécaniques des plaques obtenues sont rassemblées dans le tableau 4.

### EXEMPLE 21

A partir des fils obtenus dans l'exemple 20, on réalise des plaques composites dans les conditions de l'exemple 2.

Les mesures des propriétés mécaniques des plaques obtenues sont rassemblées dans le tableau 4.

### EXEMPLE 22

Des filaments obtenus dans les conditions de l'exemple 1 sont revêtus d'une première composition A et d'une deuxième composition B suivantes (en pourcentage pondéral) :

### Composition A

- polyuréthane aliphatique hexaacrylate de masse moléculaire = 800 ⁽¹⁴⁾ 12
- polyéther tétraacrylate de masse moléculaire supérieure à 1000 ⁽¹⁵⁾ 20
- gamma-méthacryloxypropyl triméthoxysilane ⁽³⁾ 10
- gamma-glycidoxypropyl triméthoxysilane ⁽⁴⁾ 10
- isostéarate de polyéthylèneglycol 300 ⁽¹²⁾ 5
- polyéthylène glycol 300 ⁽¹⁵⁾ 5

### Composition B

- triméthylhexanediamine-1,6 7
- palmitate d'isopropyle 12
- alcool laurique éthoxylé (4 OE) ⁽⁸⁾ 10
- dérivé aromatique alkoxylé ⁽⁹⁾ 9

Les compositions A et B présentent une viscosité de 110,4 x 10⁻³ Pa.s (110,4 cP) et 39 x 10⁻³ Pa.s (39 cP) à 22°C, respectivement, le rapport r étant égal à 1,19.

Les filaments sont rassemblés en fils qui sont bobinés en stratifils.

Sur les fils extraits des stratifils, on mesure la quantité de bourre, la raideur, la perte au feu, le titre et la ténacité. Les résultats de ces mesures sont rassemblés dans le tableau 1.

A partir des fils ainsi obtenus, on réalise des plaques composites dans les conditions décrites dans l'exemple 1.

Les mesures des propriétés mécaniques des plaques obtenues sont rassemblées dans le tableau 4.

### EXEMPLE 23

A partir des fils obtenus dans l'exemple 22, on réalise des plaques composites dans les conditions de l'exemple 2.

Les mesures des propriétés mécaniques des plaques obtenues sont rassemblées dans le tableau 4.

Dans les exemples qui précèdent, on remarque que les fils obtenus selon l'invention sont aisément manipulables. Ils présentent une ténacité élevée pour une perte au feu relativement faible. Par ailleurs, les fils selon l'invention présentent une bonne résistance à l'abrasion mesurée par la faible quantité de bourre récupérée après passage sur les embarrages. On note que le fil obtenu selon les exemples 4, 6 et 20 possède une bonne aptitude au tissage et à l'imprégnation (faible intégrité après soumission au test d'abrasion) et que celui des exemples 8, 9 et 11 présente une bonne intégrité avant et après soumission au test d'abrasion.

Par ailleurs, les fils selon l'invention permettent de renforcer efficacement des matières organiques, notamment celles de base de résine polyester ou époxyde. Les composites incorporant lesdits fils présentent un module en flexion élevé, en particulier pour les résines polyester (de l'ordre de 40 000 MPa), ce module élevé étant conservé après vieillissement. La contrainte de rupture en cisaillement est également élevée, jusqu'à 90 MPa, dans les composites à base de résine polyester, une telle valeur étant difficile à atteindre avec des fils de verre revêtu d'un ensimage aqueux. La valeur de cette contrainte reste bonne après vieillissement (perte inférieure à 30 %)

| | | |
|---|---|---|
| (1) | commercialisé sous la référence « Ebecryl 810 » | par la société UNION CHIMIQUE BELGE |
| (2) | commercialisé sous la référence « Ebecryl 220 » | par la société UNION CHIMIQUE BELGE |
| (3) | commercialisé sous la référence « Silquest Si A 174 » | par la société WITCO OSI |
| (4) | commercialisé sous la référence « Silquest Si A 187 » | par la société WITCO OSI |
| (5) | commercialisé sous la référence « Igepal CO630» | par la société RHODIA |
| (6) | commercialisé sous la référence « Ancamine 2089 M » | par la société AIR PRODUCTS |
| (7) | commercialisé sous la référence « TMP ester » | par la société LAMBERTI |
| (8) | commercialisé sous la référence « Simulsol P4 » | par la société SEPPIC |
| (9) | commercialisé sous la référence Simulsol BPPE » | par la société SEPPIC |
| (10) | commercialisé sous la référence « Neoxil AO 83634 » | par la société DSM |
| (11) | commercialisé sous la référence « Araldite GY 285 » | par la société CIBA-GEIGY |
| (12) | commercialisé sous la référence « 2018 LDM » | par la société SEPPIC |
| (13) | commercialisé sous la référence « Ebecryl 5129 » | par la société UNION CHIMIQUE BELGE |
| (14) | commercialisé sous la référence « IRR 443» | par la société UNION CHIMIQUE BELGE |
| (15) | commercialisé sous la référence a Polyglycol PEG 300 » | par la société CLARIANT |

**Tableau 1**

| | **Ex. 1** | **Ex. 3** | **Ex. 4** | **Ex. 6** | **Ex. 8** | **Ex. 9** | **Ex. 11** | **Ex. 12** | **Ex.14** | **Ex. 16** | **Ex. 18** | **Ex. 20** | **Ex. 22** |
|---|---|---|---|---|---|---|---|---|---|---|---|---|---|
| Bourre (mg) | 1 | 6 | 5 | 7 | 0,7 | 0,7 | 2,3 | 8 | 0 | 3,7 | 2 | 0,7 | 1,3 |
| Raideur (mm) | 165 (62) | 147 (62) | 142 (60) | 133 (60) | 193 (75) | 182 (83) | 172 (72) | 180 (65) | 165 (63) | 162 (60) | 160 (65) | 142 (60) | 152 (60) |
| Perte au feu (%) | 0,55 | 0,53 | 0,53 | 0,51 | 0,61 | 0,55 | 0,54 | 0,52 | 0,48 | 0,53 | 0,47 | 0,51 | 0,49 |
| Titre (tex) | 302 | 312 | 301 | 306 | 309 | 302 | 300 | 306 | 297 | 284 | 295 | 301 | 298 |
| Tenacité (g/tex) | | 47,8 | 48,7 | - | 45,6 | 50,7 | 44,7 | 45,8 | 43,8 | 38,2 | 38,7 | 39,0 | 24,3 |
| σ | | (4,1) | (1,5) | - | (2,0) | (2,0) | (2,2) | (1,5) | (2,0) | (4,8) | (5,7) | (3,4) | (6,6) |

**Tableau 2**

| | **Ex.1** | **Ex. 2** | **Ex. 3** | **Ex. 4** | **Ex. 5** | **Ex. 6** | **Ex. 7** |
|---|---|---|---|---|---|---|---|
| Taux de verre (% en poids) | 68,02 | 66,11 | 62,86 | 65,17 | 63,90 | 69,01 | 63,19 |
| Résine | polyester | époxy | époxy | polyester | époxy | polyester | époxy |

| FLEXION | | | | | | | |
|---|---|---|---|---|---|---|---|
| • Contrainte de rupture pour 100% de verre (MPa) | | | | | | | |
| - avant vieillissement | 3111,1 | 2709,1 | 2718,2 | 3143,7 | 2752,9 | 3011,9 | 2747,7 |
| σ | (90,4) | (131,3) | (124,9) | (76,7) | (121,6) | (130,9) | (184,8) |
| - après vieillissement | 2389,6 | 2380,0 | 2239,3 | 2137,7 | 2407,2 | 2303,9 | 2513,3 |
| σ | (48,0) | (91,7) | (83,9) | (71) | (41,7) | (74,6) | (202,1) |
| • Module (MPa) | | | | | | | |
| -avant vieillissement | 40439 | 38531 | 35820 | 38175 | 35978 | 39806 | 36184 |
| - σ | (561) | (285) | (845) | (1433) | (524) | (818) | (1901) |
| - après vieillissement | 40316 | 38929 | 36093 | 37273 | 36795 | 40790 | 35928 |
| σ | (1006) | (349) | (910) | (847) | (613) | (1076) | (2661) |

| CISAILLEMENT | | | | | | | |
|---|---|---|---|---|---|---|---|
| • Contrainte de rupture (MPa) | | | | | | | |
| - avant vieillissement | 89,4 | 81,7 | 80,0 | 86,7 | 82,6 | 90,2 | 79,9 |
| σ | (0,6) | (0,7) | (1,2) | (0,9) | (0,9) | (0,9) | (1,0) |
| - après vieillissement | 64,9 | 48,5 | 48,6 | 67,2 | 70,3 | 68,9 | 65,5 |
| σ | (0,7) | (0,8) | (0,7) | (0,8) | 0,5 | (1,1) | (2,6) |

**Tableau 3**

| | **Ex. 8** | **Ex. 9** | **Ex. 10** | **Ex. 11** | **Ex. 12** | **Ex. 13** | **Ex. 14** | **Ex. 15** |
|---|---|---|---|---|---|---|---|---|
| Taux de verre (% en poids) | 63,68 | 67,04 | 61,02 | 63,45 | 66,13 | 63,69 | 66,99 | 64,73 |
| Résine | époxy | polyester | époxy | époxy | polyester | époxy | polyester | époxy |

| FLEXION | | | | | | | | |
|---|---|---|---|---|---|---|---|---|
| • Contrainte de rupture pour 100% | | | | | | | | |
| de verre (MPa) | | | | | | | | |
| - avant vieillissement | 2682,4 | 3187,5 | 2755,8 | 2789,9 | 3155,3 | 2751,7 | 3137,1 | 2662,2 |
| σ | (103,6) | (129,4) | (73,4) | (75,2) | (91,3) | (89,6) | (146,8) | (197,6) |
| - après vieillissement | 1916,2 | 2254,1 | 2357,7 | 1693,0 | 2373,0 | 2335,4 | 2260,0 | 2562,0 |
| σ | (135,6) | (46,2) | (44,2) | (53,7) | (72,5) | (100,2) | (64,3) | (75,4) |
| • Module (MPa) | | | | | | | | |
| - avant vieillissement | 35604 | 38716 | 33378 | 35112 | 37748 | 35207 | 40221,0 | 35961 |
| σ | (1777) | (599) | (502) | (487) | (979) | (345) | (866) | (828) |
| - après vieillissement | 34499 | 37718 | 32917 | 33967 | 36928 | 34717 | 38919,0 | 36178 |
| σ | (3080) | (487) | (782) | (733) | (729) | (459) | (699) | (363) |

| CISAILLEMENT | | | | | | | | |
|---|---|---|---|---|---|---|---|---|
| • Contrainte de rupture (MPa) | | | | | | | | |
| - avant vieillissement | 79,5 | 84,8 | 79,4 | 77,8 | 84,1 | 81,4 | 89,3 | 80,2 |
| σ | (0,6) | (1,3) | (0,2) | (0,2) | (1,4) | (0,6) | (0,5) | (1,9) |
| après vieillissement | 36,1 | 64,1 | 58,9 | 29,8 | 59,9 | 55,6 | 67,0 | 72,7 |
| σ | (1,2) | (1,10) | (0,6) | (1,0) | (0,80) | (0,7) | (1,0) | (0,8) |

**Tableau 4**

| | **Ex. 16** | **Ex. 17** | **Ex. 18** | **Ex. 19** | **Ex.20** | **Ex. 21** | **Ex. 22** | **Ex. 23** |
|---|---|---|---|---|---|---|---|---|
| Taux de verre (% en poids) | 65,00 | 62,56 | 66,3 | 64,24 | | | 67,8 | 64,77 |
| Résine | polyester | époxy | polyester | époxy | polyester | époxy | polyester | époxy |

| FLEXION | | | | | | | | |
|---|---|---|---|---|---|---|---|---|
| • Contrainte de rupture pour 100% de verre (MPa) | | | | | | | | |
| - avant vieillissement | 3150,1 | 2817,0 | 3221,9 | 2798,8 | 3074,3 | 2827,1 | 3218,4 | 2824,8 |
| σ | (113,2) | (140,0) | (161) | (133,5) | (178,4) | (112,2) | (129,6) | (70,8) |
| - après vieillissement | 2054,0 | 2146,0 | 2045,9 | 2646,0 | 2286,5 | 2603,0 | 2129,0 | 2557,7 |
| σ | (102,3) | (43,8) | (43,4) | (97,7) | (77,8) | (52,6) | (104,9) | (111,1) |
| • Module (MPa) | | | | | | | | |
| - avant vieillissement σ | 37479 | 35584 | 39381 | 37285 | 36545 | 36978 | 40457 | 37778 |
| | (506) | (889) | (1015) | (971) | (2644) | (476) | (735) | (477) |
| - après vieillissement σ | 35295 | 355,64 | 37529 | 37068 | 3481 | 3671 | 38262 | 37622 |
| | (311) | (540) | (759) | (851) | (1117) | (481) | (913) | (443) |

| CISAILLEMENT | | | | | | | | |
|---|---|---|---|---|---|---|---|---|
| • Contrainte de rupture (MPa) | | | | | | | | |
| - avant vieillissement | 85,0 | 88,5 | 84,8 | 83,3 | 86,9 | 83,4 | 86,7 | 83,2 |
| σ | (2,1) | (1,4) | (1,3) | (0,7) | (1,0) | (1,4) | (1,10) | (0,40). |
| - après vieillissement | 67,6 | 69,2 | 64,6 | 70,9 | 67,7 | 71,1 | 65,0 | 70,0 |
| σ | (0,9) | (0,60) | (1,7) | (1,10) | (0,70) | (0,4) | (1,3) | (0,80) |

## Revendications

1. Fil de verre revêtu d'une composition d'ensimage constituée d'une solution dont la teneur en solvant est inférieure à 5 % en poids, cette solution comprenant au moins 45 % en poids de composants susceptibles de polymériser, ces composants polymérisables étant pour au moins 40% d'entre eux des composants de masse moléculaire comprise entre 750 et 5000 et ces composants polymérisables comprenant un mélange susceptible de polymériser :
- de composant(s) présentant au moins une fonction réactive acrylique et/ou méthacrylique,
- et de composant(s) présentant au moins une fonction réactive amine primaire et/ou amine secondaire,
les composants polymérisables comprenant au moins 20 % en poids d'un composant présentant au moins deux fonctions réactives acrylique et/ou méthacrylique de masse moléculaire comprise entre 750 et 5000, et au moins un composant présentant au moins deux fonctions réactives amine primaire et/ou amine secondaire.

2. Fil de verre selon la revendication 1, **caractérisé en ce qu'**au moins 40 % des composants polymérisables présentent au moins deux fonctions réactives choisies parmi les fonctions acrylique, méthacrylique, amine primaire et amine secondaire.

3. Fil de verre selon l'une des revendications 1 ou 2, **caractérisé en ce que** plus de 50 % des composants polymérisables présentant au moins une fonction réactive choisie parmi les fonctions acrylique, méthacrylique, amine primaire et amine secondaire.

4. Fil de verre selon l'une des revendications 1 à 3, **caractérisé en ce que** la teneur en composant(s) présentant au moins une fonction acrylique et/ou au moins une fonction réactive méthacrylique est comprise entre 15 et 60 % en poids de la composition d'ensimage.

5. Fil de verre selon l'une quelconque des revendications 1 à 4, **caractérisé en ce qu'**au moins 50 % des composants polymérisables présentent au moins deux fonctions réactives choisies parmi les fonctions acrylique et méthacrylique.

6. Fil de verre selon l'une des revendications 1 à 5, **caractérisé en ce que** la proportion de composant(s) présentant au moins une fonction réactive amine primaire et/ou amine secondaire est comprise entre 4 et 40 % en poids de la composition d'ensimage.

7. Fil de verre selon l'une des revendications 1 à 6, **caractérisé en ce que** le rapport r du nombre de sites réactifs (méth)acrylique au nombre de sites réactifs amine primaire et/ou amine secondaire est compris entre 0,15 et 3.

8. Fil de verre selon l'une des revendications 1 à 7, **caractérisé en ce que** la composition d'ensimage comprend jusqu'à 8 % en poids d'au moins un catalyseur.

9. Fil de verre selon l'une des revendications 1 à 8, **caractérisé en ce que** la composition comprend au moins un agent de couplage dans une proportion comprise entre 0 et 30 %.

10. Fil de verre selon l'une des revendications 1 à 9, **caractérisé en ce que** la composition comprend au moins un agent de mise en oeuvre textile dans une proportion comprise entre 0 et 35 %.

11. Fil de verre selon l'une des revendications 1 à 10, **caractérisé en ce que** la composition comprend jusqu'à 8 % en poids d'au moins un agent filmogène.

12. Composition d'ensimage pour fil de verre constituée d'une solution dont la teneur en solvant est inférieure à 5 % en poids, cette solution comprenant au moins 45 % en poids de composants susceptibles de polymériser, ces composants polymérisables étant pour au moins 40 % d'entre eux des composants de masse moléculaire comprise entre 750 et 5000 et ces composants polymérisables comprenant au moins un mélange susceptible de polymériser :
- de composant(s) présentant au moins une fonction réactive acrylique et/ou méthacrylique,
- et de composant(s) présentant au moins une fonction réactive amine primaire et/ou amine secondaire,
les composants polymérisables comprenant au moins 20 % en poids d'un composant présentant au moins deux fonctions réactives acrylique et/ou méthacrylique de masse moléculaire comprise entre 750 et 5000, et au moins un composant présentant au moins deux fonctions réactives amine primaire et/ou amine secondaire.

13. Composition selon la revendication 12, **caractérisé en ce qu'**au moins 40 % des composants polymérisables présentent au moins deux fonctions réactives choisies parmi les fonctions acrylique, méthacrylique, amine primaire et amine secondaire.

14. Procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils au moins une partie de la composition d'ensimage selon l'une des revendications 12 ou 13, le(s) fil(s) étant revêtu(s) de la composition d'ensimage au plus tard lors de la collecte du (des) fil(s).

15. Procédé selon la revendication 14, **caractérisé en ce que** la composition est déposée en une étape à la surface des filaments en cours d'étirage et avant rassemblement des filaments en fils.

16. Procédé selon la revendication 14, **caractérisé en ce que** l'on dépose une première composition stable ayant une viscosité comprise entre 20 et 500 cP à la surface des filaments, et au moins une deuxième composition stable, amenée séparément de la première, ayant une viscosité comprise entre 20 et 500 cP à la surface des filaments ou du (des) fil(s) au plus tôt lors du dépôt de la première composition et au plus tard lors de la collecte du ou des fils, l'écart de viscosité entre les compositions déposées étant inférieur à 250 cP, le mélange des compositions déposées formant la composition d'ensimage selon l'une des revendications 12 ou 13 et étant apte à polymériser à la température ambiante.

17. Procédé selon la revendication 16, **caractérisé en ce que** la première composition comprend au moins un composant présentant au moins une fonction réactive acrylique et/ou méthacrylique et que la deuxième composition comprend au moins un composant présentant au moins une fonction réactive amine primaire et/ou amine secondaire.

18. Composite comprenant au moins une matière organique et/ou inorganique et des fils de verre ensimés, **caractérisé en ce que** tout ou partie des fils de verre est constitué de fils de verre ensimés selon l'une des revendications 1 à 11.

## Claims

1. A glass strand coated with a sizing composition consisting of a solution whose solvent content is less than 5% by weight, this solution comprising at least 45% by weight of components capable of curing, these curable components being, in respect of at least 40% of them, components with a molecular mass of between 750 and 5000 and these curable components comprising at least one mixture capable of curing:
- one or more components having at least one acrylic and/or methacrylic reactive functional group and
- one or more components having at least one primary amine and/or secondary amine reactive functional group,
the curable components comprising at least 20% by weight of a component having at least two acrylic and/or methacrylic reactive functional groups and having a molecular mass of between 750 and 5000, and at least one component having at least two primary and/or secondary amine reactive functional groups.

2. The glass strand as claimed in claim 1, **characterized in that** at least 40% of the curable components have at least two reactive functional groups chosen from acrylic, methacrylic, primary amine and secondary amine functional groups.

3. The glass strand as claimed in either of claims 1 and 2, **characterized in that** more than 50% of the curable components have at least one reactive functional group chosen from acrylic, methacrylic, primary amine and secondary amine functional groups.

4. The glass strand as claimed in one of claims 1 to 3, **characterized in that** the content of component(s) having at least one acrylic functional group and/or at least one methacrylic reactive functional group is between 15 and 60% by weight of the sizing composition.

5. The glass strand as claimed in any one of claims 1 to 4, **characterized in that** at least 50% by weight of the curable components have at least two reactive functional groups chosen from acrylic and methacrylic functional groups.

6. The glass strand as claimed in one of claims 1 to 5, **characterized in that** the proportion of component(s) having at least one primary and/or secondary amine reactive functional group is between 4 and 40% by weight of the sizing composition.

7. The glass strand as claimed in one of claims 1 to 6, **characterized in that** the ratio r of the number of (meth)acrylic reactive sites to the number of primary and/or secondary amine reactive sites is between 0.15 and 3.

8. The glass strand as claimed in one of claims 1 to 7, **characterized in that** the sizing composition includes up to 8% by weight of at least one catalyst.

9. The glass strand as claimed in one of claims 1 to 8, **characterized in that** the composition includes at least one coupling agent in a proportion of between 0 and 30% by weight.

10. The glass strand as claimed in one of claims 1 to 9, **characterized in that** the composition includes at least one textile processing aid in a proportion of between 0 and 35%.

11. The glass strand as claimed in one of claims 1 to 10, **characterized in that** the composition includes up to 8% by weight of at least one film-forming agent.

12. A sizing composition for glass strand, consisting of a solution whose solvent content is less than 5% by weight, this solution comprising at least 45% by weight of components capable of curing, these curable components being, in respect of at least 40% of them, components with a molecular mass of between 750 and 5000 and these curable components comprising at least one mixture capable of curing:
- one or more components having at least one acrylic and/or methacrylic reactive functional group and
- one or more components having at least one primary amine and/or secondary amine reactive functional group,
the curable components comprising at least 20% by weight of a component having at least two acrylic and/or methacrylic reactive functional groups and having a molecular mass of between 750 and 5000, and at least one component having at least two primary and/or secondary amine reactive functional groups.

13. The composition as claimed in claim 12, **characterized in that** at least 40% of the curable components have at least two reactive functional groups chosen from acrylic, methacrylic, primary amine and secondary amine functional groups.

14. A process for producing sized glass strands in which a multiplicity of streams of molten glass, flowing out from a multiplicity of orifices located at the base of one or more bushings, is drawn in the form of one or more sheets of continuous filaments, then the filaments are assembled into one or more strands which are collected on a moving support, said process consisting in depositing, on the surface of the filaments while they are being drawn and before the filaments have been assembled into strands, at least some of the sizing composition as claimed in either of claims 12 and 13, the strand(s) being coated with the sizing composition at the latest during collection of the strand(s).

15. The process as claimed in claim 14, **characterized in that** the composition is deposited in one step on the surface of the filaments while they are being drawn and before the filaments are assembled into strands.

16. The process as claimed in claim 14, **characterized in that** a first stable composition having a viscosity of between 20 and 500 cP is deposited on the surface of the filaments and at least one second stable composition, fed separately from the first, having a viscosity of between 20 and 500 cP is deposited on the surface of the filaments or of the strand(s) at the earliest while the first composition is being deposited and at the latest while the strand or strands is/are being collected, the difference in viscosity between the compositions deposited being less then 250 cP, the mixture of the compositions deposited forming the sizing composition as claimed in either of claims 12 and 13 and being curable at room temperature.

17. The process as claimed in claim 16, **characterized in that** the first composition comprises at least one component having at least one acrylic and/or methacrylic reactive functional group and **in that** the second composition comprises at least one component having at least one primary amine and/or secondary amine reactive functional group.

18. A composite comprising at least one organic and/or inorganic material and sized glass strands, **characterized in that** all or some of the glass strands consist of sized glass strands as claimed in one of claims 1 to 11.

## Patentansprüche

1. Glasfaden, der mit einer Schlichtezusammensetzung überzogen ist, die von einer Lösung gebildet wird, deren Lösungsmittelgehalt weniger als 5 Gew.-% beträgt und welche mindestens 45 Gew.-% Komponenten umfasst, die in der Lage sind, zu polymerisieren, wobei diese polymerisierbaren Komponenten wenigstens für 40 % von ihnen Komponenten mit einem Molekulargewicht von 750 bis 5000 sind und ein Gemisch umfassen, das in der Lage ist:
- (eine) Komponente(n), die mindestens eine reaktive Acryl- und/oder Methacrylfunktion aufweist (aufweisen), und
- (eine) Komponente(n), die mindestens eine reaktive primäre und/oder sekundäre Aminfunktion aufweist (aufweisen),
zu polymerisieren, wobei die polymerisierbaren Komponenten wenigstens 20 Gew.-% einer Komponente mit einem Molekulargewicht von 750 bis 5000, die mindestens zwei reaktive Acryl- und/oder Methacrylfunktionen aufweist, und wenigstens eine Komponente, die mindestens zwei reaktive primäre und/oder sekundäre Aminfunktionen aufweist, umfassen.

2. Glasfaden nach Anspruch 1, **dadurch gekennzeichnet, dass** wenigstens 40 % der polymerisierbaren Komponenten mindestens zwei reaktive Funktionen aufweisen, die aus Acryl-, Methacryl-, primären Amin- und sekundären Aminfunktionen ausgewählt sind.

3. Glasfaden nach Anspruch 1 oder 2, **dadurch gekennzeichnet, dass** mehr als 50 % der polymerisierbaren Komponenten mindestens eine reaktive Funktion aufweisen, die aus Acryl-, Methacryl-, primären Amin- und sekundären Aminfunktionen ausgewählt ist.

4. Glasfaden nach einem der Ansprüche 1 bis 3, **dadurch gekennzeichnet, dass** der Gehalt an (einer) Komponente(n), die mindestens eine Acryl- und/oder mindestens eine reaktive Methacrylfunktion aufweist (aufweisen), 15 bis 60 Gew.-% der Schlichtezusammensetzung beträgt.

5. Glasfaden nach einem der Ansprüche 1 bis 4, **dadurch gekennzeichnet, dass** wenigstens 50 % der polymerisierbaren Komponenten, die mindestens zwei reaktive Funktionen aufweisen, aus Acryl- und Methacrylfunktionen ausgewählt sind.

6. Glasfaden nach einem der Ansprüche 1 bis 5, **dadurch gekennzeichnet, dass** der Anteil an (einer) Komponente(n), die mindestens eine reaktive primäre und/oder sekundäre Aminfunktion aufweist (aufweisen), 4 bis 40 Gew.-% der Schlichtezusammensetzung beträgt.

7. Glasfaden nach einem der Ansprüche 1 bis 6, **dadurch gekennzeichnet, dass** das Verhältnis r von Anzahl der reaktiven (Meth-)Acrylstellen zu Anzahl der reaktiven primären und/oder sekundären Aminstellen 0,15 bis 3 beträgt.

8. Glasfaden nach einem der Ansprüche 1 bis 7, **dadurch gekennzeichnet, dass** die Schlichtezusammensetzung bis zu 8 Gew.-% mindestens eines Katalysators enthält.

9. Glasfaden nach einem der Ansprüche 1 bis 8, **dadurch gekennzeichnet, dass** die Zusammensetzung mindestes ein Haftmittel mit einem Anteil von zwischen 0 und 30 % enthält.

10. Glasfaden nach einem der Ansprüche 1 bis 9, **dadurch gekennzeichnet, dass** die Zusammensetzung mindestens ein Textilhilfsmittel mit einem Anteil von zwischen 0 und 35 % enthält.

11. Glasfaden nach einem der Ansprüche 1 bis 10, **dadurch gekennzeichnet, dass** die Zusammensetzung bis zu 8 Gew.-% mindestens eines filmbildenden Mittels enthält.

12. Schlichtezusammensetzung für einen Glasfaden, die von einer Lösung gebildet wird, deren Lösungsmittelgehalt weniger als 5 Gew.-% beträgt und welche mindestens 45 Gew.-% Komponenten umfasst, die in der Lage sind, zu polymerisieren, wobei diese polymerisierbaren Komponenten wenigstens für 40 % von ihnen Komponenten mit einem Molekulargewicht von 750 bis 5000 sind und wenigstens ein Gemisch umfassen, das in der Lage ist:
- (eine) Komponente(n), die mindestens eine reaktive Acryl- und/oder Methacrylfunktion aufweist (aufweisen), und
- (eine) Komponente(n), die mindestens eine reaktive primäre und/oder sekundäre Aminfunktion aufweist (aufweisen),
zu polymerisieren, wobei die polymerisierbaren Komponenten wenigstens 20 Gew.-% einer Komponente mit einem Molekulargewicht von 750 bis 5000, die mindestens zwei reaktive Acryl- und/oder Methacrylfunktionen aufweist, und wenigstens eine Komponente, die mindestens zwei reaktive primäre und/oder sekundäre Aminfunktionen aufweist, umfassen.

13. Zusammensetzung nach Anspruch 12, **dadurch gekennzeichnet, dass** wenigstens 40 % der polymerisierbaren Komponenten mindestens zwei reaktive Funktionen aufweisen, die aus Acryl-, Methacryl-, primären Amin- und sekundären Aminfunktionen ausgewählt sind.

14. Verfahren zur Herstellung von mit einer Schlichte überzogenen Glasfäden, gemäß welchem eine Vielzahl von Glasstrahlen, die aus einer Vielzahl von Öffnungen fließen, die im Boden einer oder mehrerer Spinndüsen angeordnet sind, zur Form einer oder mehrerer Bahnen aus endlosen Filamenten gezogen wird und anschließend die Filamente zu einem oder mehreren Fäden vereinigt werden, die auf einem sich bewegenden Träger gesammelt werden, wobei das Verfahren darin besteht, auf der Oberfläche der im Ziehen begriffenen Filamente und vor der Vereinigung der Filamente zu Fäden wenigstens einen Teil der Schlichtezusammensetzung nach Anspruch 12 oder 13 aufzubringen, wobei der (die) Faden (Fäden) spätestens während des Sammelns des (der) Fadens (Fäden) mit der Schlichtezusammensetzung überzogen wird (werden).

15. Verfahren nach Anspruch 14, **dadurch gekennzeichnet, dass** die Zusammensetzung in einer Stufe während des Ziehens und vor Vereinigung der Filamente zu Fäden auf die Oberfläche der Filamente aufgebracht wird.

16. Verfahren nach Anspruch 14, **dadurch gekennzeichnet, dass** eine erste stabile Zusammensetzung mit einer Viskosität von 20 bis 500 cP auf die Oberfläche der Filamente und mindestens eine zweite stabile Zusammensetzung, die separat von der ersten zugeführt wird und eine Viskosität von 20 bis 500 cP besitzt, auf die Oberfläche der Filamente oder des (der) Fadens (Fäden) frühestens während des Aufbringens der ersten Zusammensetzung und spätestens während des Sammelns des (der) Fadens (Fäden) aufgebracht wird, wobei die Differenz der Viskositäten der aufgebrachten Zusammensetzungen weniger als 250 cP beträgt und die Mischung der aufgebrachten Zusammensetzungen die Schlichtezusammensetzung nach Anspruch 12 oder 13 bildet und in der Lage ist, bei Umgebungstemperatur zu polymerisieren.

17. Verfahren nach Anspruch 16, **dadurch gekennzeichnet, dass** die erste Zusammensetzung wenigstens eine Komponente umfasst, die mindestens eine reaktive Acryl- und/oder Methacrylfunktion aufweist, **und dass** die zweite Zusammensetzung wenigstens eine Komponente umfasst, die mindestens eine reaktive primäre und/oder sekundäre Aminfunktion aufweist.

18. Verbundmaterial, das mindestens ein organisches und/oder anorganisches Material und mit einer Schlichte überzogene Glasfäden umfasst, **dadurch gekennzeichnet, dass** die Glasfäden vollständig oder teilweise von mit einer Schlichte überzogenen Glasfäden nach einem der Ansprüche 1 bis 11 gebildet werden.
